# EUROPEAN PATENT APPLICATION

(11) **EP 4 428 725 A1**
(43) Date of publication of application: **11.09.2024**
(21) Application number: 24161263.9
(22) Date of filing: 04.03.2024
(51) Int. Cl.: G06F 21/32, H04L 9/40

(54) **SYSTEMS AND METHODS FOR BIOMETRIC IDENTIFICATION**

(30) Priority: 10.03.2023 US 202318182260
(71) Applicant: TMRW Foundation IP SARL, 2310 Luxembourg (LU)
(72) Inventor: YERLI, Cevat, Dubai (AE); MANZANERA LIDON, Jesús, 03295 Alicante (ES)
(74) Representative: Dentons UK and Middle East LLP

(57) **Abstract**

A biometric authentication system implementing a registration phase comprising: assigning a registered biometric device's identification information to a registered user; and storing, on a remote computer system, initial biometric data captured by the registered device, wherein the initial biometric data is stored on the registered device and on the remote system; and an access granting phase comprising receiving biometric device identification information from the registered device; determining that the received biometric device identification information matches the registered device's identification information assigned to the registered user; in response to determining that the received device identification information matches the registered device's identification information assigned to the registered user, instructing the registered device to re-capture the registered user's biometric data; comparing the re-captured biometric data of the registered user to the initial biometric data stored on the registered device; and based on the comparing, granting the registered user access to a resource.

## Description

### FIELD

The present disclosure relates generally to biometric identification systems. More particularly, the present disclosure relates to systems and methods for granting access to a registered user upon request to a wide variety of devices, services, work areas and/or devices through biometric identification.

### BACKGROUND

Individuals have measurable, physical features that are essentially unique to the individual and may thus be used to distinguish one individual from another. These features are also known as the biometrics of the individual and includes a person's facial image, iris scan, fingerprint and voice recording, amongst others. There are several biometric devices available on the market that can be used to capture the biometrics of an individual. By capturing the biometrics of an individual and comparing them with known biometrics of the individual, the individual can be recognized and/or his identity verified. Biometric devices automate the recognition and identification of an individual.

Biometric identification systems typically comprise an authentication module that is located remotely from the biometric device. In current systems the known biometrics of the individual are stored in the authentication module, which performs a comparison between the known biometrics and the captured biometrics. This comparison usually requires that the captured biometrics of the biometric devices are uploaded to the remote authentication module, which is done generally without the biometric data being password-protected and/or not handled and stored very securely. Further in current biometric identification systems, the authentication sequence generally remains fixed. Current biometric identification systems also generally do not provide for life and/or consciousness detection. It is the object of this disclosure to mitigate at least some of the shortcomings indicated above.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In one aspect of the current disclosure, a biometric authentication system is provided, comprising a remote computer system comprising a processor and memory storing program instructions configured to cause the remote computer system to perform steps comprising, in a registration phase: assigning a registered biometric device's identification information to a registered user; and storing, on the remote computer system, initial biometric data captured by the registered biometric device, wherein the initial biometric data is stored on the registered biometric device and on the remote computer system; and in an access granting phase, receiving biometric device identification information from the registered biometric device; determining that the received biometric device identification information matches the registered biometric device's identification information assigned to the registered user; in response to determining that the received biometric device identification information matches the registered biometric device's identification information assigned to the registered user, instructing the registered biometric device to re-capture the registered user's biometric data; comparing the re-captured biometric data of the registered user to the initial biometric data stored on the registered biometric device; and based on the comparing, granting the registered user access to a resource.

In contrast to prior systems, during the access granting phase, the re-captured biometric data does not need to be transmitted to the remote system, but can instead be compared locally to what is already stored on the biometric device.

In one embodiment, the registration phase comprises assigning login credentials to the registered user and the access granting phase comprises receiving biometric device identification information from an unregistered biometric device; requesting the registered user to supply the login credentials; in response to receiving the login credentials, retrieving the initial biometric data stored on the remote computer system; instructing the unregistered biometric device to re-capture the biometric data of the registered user; comparing the initial biometric data stored during registration with the re-captured biometric data of the registered user; and based on the comparing, granting the registered user access to the resource.

In some embodiments, the user's biometric device's identification information is one of a MAC address, a cryptographic hash, a universally unique identifier, an organizationally unique identifier, or a mobile equipment identifier.

In some embodiments, the remote computer system comprises a server computer.

In some embodiments, the registration phase comprises generating an authentication sequence and registering it with the registered user, and wherein the registered biometric device re-captures the registered user's biometric data in the access granting phase according to the authentication sequence. In some embodiments, multiple different authentication sequences are generated. In further embodiments, an authentication sequence is randomly selected. For example, the registered biometric device re-captures the registered user's biometric data in the access granting phase according to an authentication sequence that is randomly selected from among the multiple authentication sequences. In yet further embodiments, an authentication sequence is selected according to certain authentication sequence selection criteria. For example, the registered biometric device re-captures the registered user's biometric data in the access granting phase according to an authentication sequence that is selected from among the multiple authentication sequences according to one or more authentication sequence selection criteria. In yet further embodiments, the authentication sequence selection criteria comprise time elapsed between a previous and current access request, available biometric devices, the resource to be accessed, or a combination thereof.

In some embodiments, the biometric device is an image capturing device, and the instructions are further configured to cause the remote computer system to perform a facial image updating sequence comprising: in response to detecting a registered image capturing device linked to the registered user, capturing an image of the face of the registered user; comparing the captured image of the face of the registered user with one or more previously stored images of the face of the registered user; and in response to a difference being found, replacing the one or more previously stored images with the captured image. In some embodiments, the image capturing device is a depth camera configured to capture 3D face scans. In some embodiments, capture of 3D face scans includes obtaining depth information that is converted into 3D meshes, which may be sent to a remote computer system for reconstruction.

In further embodiments, the facial image updating sequence is implemented in response to the time period between the current login and the previous login being greater than a threshold.

In some embodiments, there is more than one biometric device, and the authentication sequence requires that more than one biometric data type is captured substantially simultaneously. In further embodiments, the authentication sequence requires capture of biometric iris data and a spoken word or phrase. In an illustrative scenario, the biometric devices are an iris scanner and a microphone, and the authentication sequence requires that during the capture of biometric iris data of the user is required to say a certain word or phrase that is captured with the microphone.

In one embodiment, the authentication sequence includes consciousness detection step. In further embodiments, the consciousness detection step comprises requesting a user to look into an iris scanner while a light source is directed into one of his eyes; and detecting whether the greater intensity of light causes the pupil of the user to constrict.

In another aspect of the current disclosure, a biometric authentication method comprises implementing, by a remote computer system comprising a processor and memory, a registration phase and an access granting phase, the registration phase comprising: assigning a registered biometric device's identification information to a registered user; and storing, on the remote computer system, initial biometric data captured by the registered biometric device, wherein the initial biometric data is also stored on the registered biometric device; and the access granting phase comprising: receiving biometric device identification information from the registered biometric device; determining that the received biometric device identification information matches the registered biometric device's identification information assigned to the registered user; in response to determining that the received biometric device identification information matches the registered biometric device's identification information assigned to the registered user, instructing the registered biometric device to re-capture the registered user's biometric data; comparing the re-captured biometric data of the registered user to the initial biometric data stored in the registered biometric device in the registration phase; and based on the comparing, granting the registered user access to a resource.

In some embodiments, the registration phase of the biometric authentication method further comprises assigning login credentials to the registered user; and the access granting phase further comprises receiving biometric device identification information from an unregistered biometric device; requesting the registered user to supply the login credentials; in response to receiving the login credentials, retrieving the initial biometric data stored on the remote computer system; instructing the unregistered biometric device to re-capture the biometric data of the registered user; comparing the initial biometric data with the re-captured biometric data of the registered user; and based on the comparing, granting the registered user access to the resource.

In some embodiments, the method includes implementing a facial image updating sequence comprising: in response to detecting a registered image capturing device linked to the registered user, capturing an image of the face of the registered user; comparing the captured image of the face of the registered user with one or more previously stored images of the face of the registered user; and in response to a difference being found, replacing the one or more previously stored images with the captured image.

### BRIEF DESCRIPTION OF THE DRAWINGS

**FIG. 1A** shows a schematic representation of a system capable of biometric authentication, according to an embodiment.
**FIG. 1B** is a flow chart of an illustrative biometric authentication process performed by a remote computer system.
**FIG. 2** illustrates a block diagram of a registration phase of the biometric authentication system, according to an embodiment.
**FIG. 3** shows a block diagram of an access granting phase of the biometric authentication system, according to an embodiment.
**FIG. 4** shows a block diagram of a facial image updating process of the current disclosure, according to an embodiment.

### DETAILED DESCRIPTION

In the following description, numerous specific details are set forth in order to provide a thorough understanding of illustrative embodiments of the present disclosure. It will be apparent to one skilled in the art, however, that many embodiments of the present disclosure may be practiced without some or all of the specific details. In some instances, well-known process steps have not been described in detail in order not to unnecessarily obscure various aspects of the present disclosure. Further, it will be appreciated that embodiments of the present disclosure may employ any combination of features described herein. The illustrative examples provided herein are not intended to be exhaustive or to limit the claimed subject matter to the precise forms disclosed.

### System Overview

A biometric authentication system implemented in a computer system has an authentication module. The authentication module has a list of registered users. Table 1 below includes a list of registered users of an illustrative authentication module. In the first column are listed the registered users 1, 2, 3, ...n. Linked to each user are registered biometric devices in the second column, biometric data in the third column, and authentication sequences in the fourth column.

**Table 1**

| Authentication Module: List of Registered Users | | | |
|---|---|---|---|
| Registered Users | Biometric Device | Stored Biometric Data | Authentication Sequence |
| user 1 | camera 1 | facial image 1 | authenti cati on |
| | iris scanner 1 | iris scan 1 | sequence 1.1, 1.2, 1.3 |
| | fingerprint scanner 1 | fingerprint 1 | |
| | microphone 1 | voice recording 1 | |
| user 2 | camera 2 | facial image 2 | authenti cati on |
| | fingerprint scanner 2 | fingerprint 2 | sequence 2 |
| | microphone 2 | voice recording 2 | |
| user 3 | camera 3 | facial image 3 | authenti cati on |
| | iris scanner 3 | iris scan 3 | sequence 3 |
| | microphone 3 | voice recording 3 | |
| user n | camera n | facial image n | authenti cati on |
| | iris scanner | iris scan n | sequence n |
| | fingerprint scanner n | fingerprint n | |

In the example shown in Table 1, each registered user has different registered biometric devices registered with him or her so that the registered biometric devices are accordingly linked to the user. Thus, the authentication module assigns the registered biometric device's identification information specifically to the user. As can be seen in Table 1, user 1 has camera 1, iris scanner 1, fingerprint scanner 1 and microphone 1 registered with him or her. On the other hand, user 2 has no iris scanner, user 3 has no fingerprint scanner and user n has no microphone registered with them but have all the other types of devices that user 1 has.

As shown in the third column, further linked to each registered user is stored biometric data. Just as the registered biometric devices for the registered users may differ so may the types of registered biometric data. As seen in Table 1, user 1 has as stored biometric data, facial image 1, iris scan 1, fingerprint 1, and voice recording 1. User 2 on the other hand as no iris scan, user 3 has no fingerprint, and user n has no voice recording.

In this example, each registered user also has linked to and assigned to him or her a certain number of authentication sequences as is shown in the fourth column on the right. These authentication sequences on the authentication module are registered to the registered user. As the registered biometric devices linked with each user differs, so may the authentication sequence of each user. It is possible for two or more users to have the same type of registered biometric devices linked to them, and thus to have the same authentication sequence. The number of authentication sequences also varies between users. In the case of user 1, it can be seen in Table 1 that user 1 has three authentication sequences linked to him or her. User 2 has two authentication sequences and user three has one authentication sequence linked to him or her. In the case of user 1, the authentication sequence linked to him are authentication sequence 1.1, authentication sequence 1.2 and authentication sequence 1.3. These authentication sequences may differ from each other in regard to several aspects. For example, the authentication sequence 1.1 may use all the registered biometric devices linked with user 1, while authentication sequence 1.2 may use camera 1, fingerprint scanner 1, and microphone 1 and not use iris scanner 1.

There is no limitation as to the number of registered biometric devices and the corresponding stored biometric data that can be linked to a registered user. For example, a registered user can have only one biometric device with only one stored biometric data linked to him or her, or any number of biometric devices with the corresponding stored biometric data.

The authentication module grants a registered user (e.g., upon request by the registered user) access to a resource, which may be any of a wide variety of devices, services, work areas and/or the like.

For a registered user to be granted access, the user must be authorized to do so by the authentication module. In some embodiments, for the user to be authorized it must pass the relevant selected authentication sequence. In some embodiments, to pass the authentication sequence the recently read or captured biometric data during the execution of the authentication sequence is compared with biometric data generally stored on the registered biometric device. If the comparison is within an acceptable level of compliance, the authentication module is so informed and the authentication module grants the user access.

So, for instance, the authentication module can grant access to a resource such as a computing device or service such as a database, a video conference or a specific piece of software or hardware. The authentication module can also grant a registered user access to an access granting device such as an electromagnetic device that can activate a boom to grant access to parking, open or unlock a door to grant access to a workspace, a laboratory or open a safe. Access granting device can also connect to a clock in and clock out device by connecting it to a device that records the time. In this manner, a record can be kept of the amount of time that a worker spends at work.

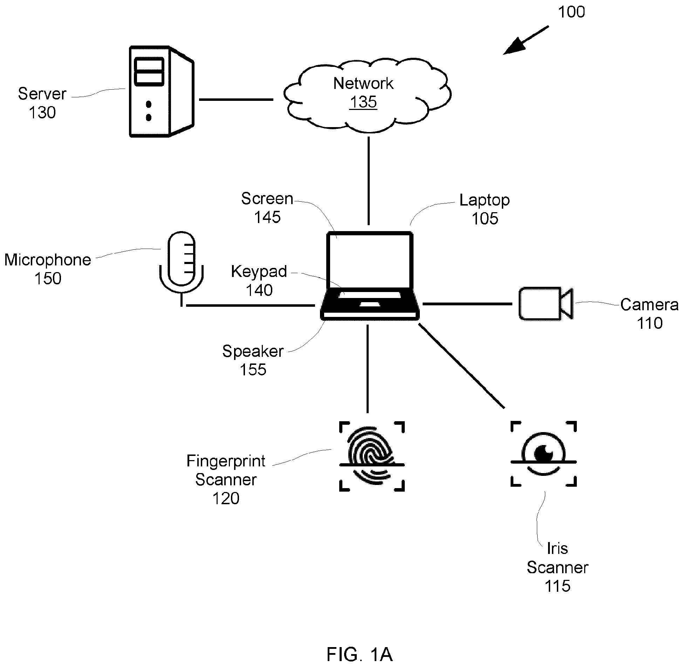

**FIG. 1A** shows an embodiment of a system **100** capable of biometric identification according to the disclosure. System **100** includes a computing device, in this case laptop **105** which generally has a keypad **140,** screen **145,** and a speaker **155.** The computing device, laptop **105** is connected to biometric devices which are an image capturing device which is camera **110,** iris scanner **115,** microphone **150** and fingerprint scanner **120.** The image capturing device also includes cameras that are able to capture depth images which are 3-dimensional representations of the object that they are capturing.

It should be further understood that embodiments of this disclosure are not limited to the biometric devices mentioned in this embodiment. Any type of biometric devices falls within the scope of this disclosure. Other biometric devices such as infrared scanners, vein pattern recognition (VPR) scanners, and retina scanners also fall within the scope of this disclosure. Furthermore, this disclosure is not limited to the number of biometric scanners mentioned. An embodiment of this disclosure may contain only 1, or 4, or 5 biometric devices, as further examples. Any number of biometric devices may be used in embodiments within the scope of this disclosure.

The computing device can also include any similar electronic device such as a personal computer, smart phone, tablet or even a special device specifically constructed to have a biometric device and a keypad with or without a screen. It should also be kept in mind that, as in the case of a smartphone or a tablet, the biometric device(s) may not be separate units but may instead be constructed as a single unit and integrated within the computing device. These single units also fall within the scope of the disclosure.

The computing device, laptop **105** is connected to a remote storage device, in this case server **130,** via network **135.** Network **135** may be a wide area network (WAN) such as the internet or a local area network (LAN).

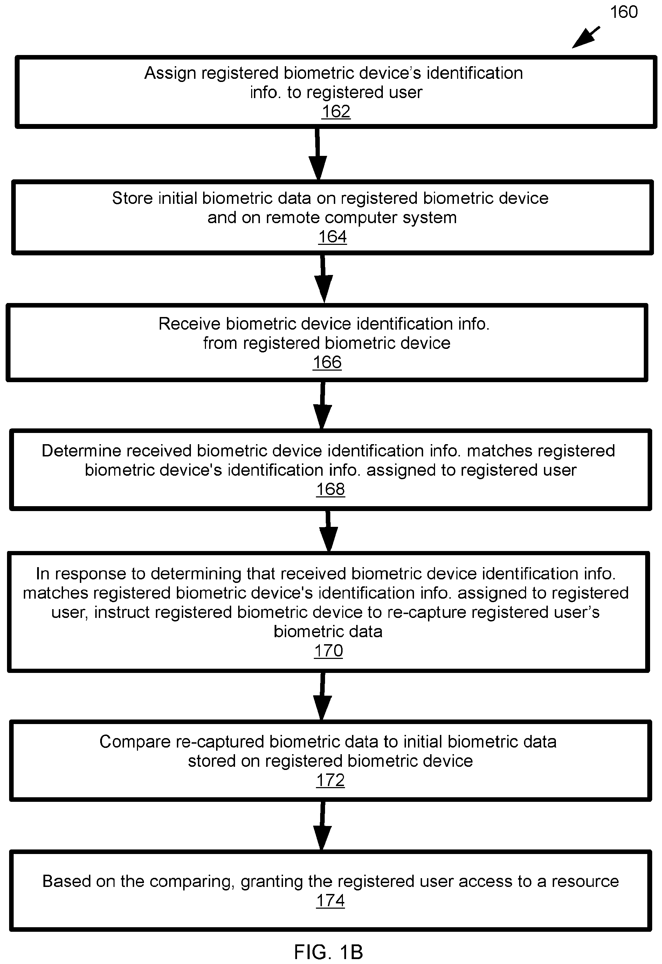

**FIG. 1B** is a flow chart of an illustrative biometric authentication process **160** performed by a remote computer system such as the server **130.** The process **160** includes a registration phase (steps **162** and **164**) and an access granting phase (steps **166, 168, 170, 172,** and **174**). At step **162,** the remote computer system assigns a registered biometric device's identification information to a registered user. At step **164,** the remote computer system stores, on the remote computer system, initial biometric data captured by the registered biometric device, such that the initial biometric data is stored on both the registered biometric device and the remote computer system. At step **166,** the remote computer system receives biometric device identification information from the registered biometric device, and at step **168,** the remote computer system determines that the received biometric device identification information matches the registered biometric device's identification information assigned to the registered user. At step **170,** in response to determining that the received biometric device identification information matches the registered biometric device's identification information assigned to the registered user, the remote computer system instructs the registered biometric device to re-capture the registered user's biometric data. At step **172,** the remote computer system compares the re-captured biometric data of the registered user to the initial biometric data stored on the registered biometric device. At step **174,** based on the comparing step **172,** the remote computer system grants the registered user access to a resource.

In an illustrative scenario involving secure access to video conferences, a system is deployed that enables improved security for accessing video conferences. The system includes a server with an authentication module storing user personal profile authentication data including user personal data, user device ID information and backup three-dimensional (3D) face scans. In this illustrative scenario, a 3D or depth camera scans a user to generate a 3D face scan, encodes the user's personal data in the scan, and stores it in storage in the camera or a user device. The user registers the personal data and 3D face scan, which is validated at a server connected to the devices. The user device ID data is retrieved by the server during registration. The system further requests to add credentials such as a password and username as backup options. If the user has already been registered by registering the user personal data, 3D face scan and user device ID information (and optional password and username) in the authentication module, when the user receives an invitation to a video conference and attempts to enter the video conference, the authentication module retrieves the user device information from the user device. If the user device information is correct, the authentication module instructs the camera to scan the user and to compare the facial features of the user stored in the camera or the user device with the facial features of the registered 3D scan. If there is a match, the user is provided access to the video conference. The comparison is done initially at the user or camera side, without needing to access the data at the server, which can still be done as a further security measure as described below. If the authentication system determines the user device ID to be false or not a match, the authentication module requests a password and login. If both the user device information and alternative login data are false or not a match, then the system denies access. However, if the user accesses from another device and is able to input the correct password and login information, the authentication module retrieves the backup 3D scan and user personal information from the server, instructs the camera of the current user device to scan the user, compares them and then, if there is a match, grants access to the user.

In some embodiments, the depth cameras capture depth information that is used to generate 3D meshes employed for the face scanning. In further embodiments, the 3D meshes define a depth image comprising volumetric information of the user. The 3D meshes may be compressed before being sent for reconstruction at the remote computer system.

In some embodiments, the generation of the 3D meshes comprises converting the depth image into a colorless point cloud wherein the depth information of the scene is encoded in a dimension of said point cloud; converting the point cloud into a three-dimensional mesh comprising a plurality of triangles and vertices by using Poisson surface algorithms; and compressing the 3D mesh. The compression of the 3D meshes can be performed based on a plurality of settings that may be controlled by a configuration application implemented by the depth camera or remote computer system. The configuration application can, for example, configure settings such as the framerate, field-of-view and spatial resolution of the transmission.

In some embodiments, the depth information is captured by a depth sensing module that comprises an infrared emitter and at least two infrared (IR) sensors and, provided that the distance between both sensors is known, the distance between the module and the grid of IR points projected onto the environment by the emitter can be precisely calculated. Alternatively, in certain embodiments of the invention the depth sensing module comprises a LIDAR (Light Detection and Ranging) sensor. Advantageously, the IR or LIDAR sensors provide depth images representative of a scene or a field-of-view thereof. The LIDAR sensor comprises both the emission and detection steps of a laser source suitable for inspecting the scene.

Further details and scenarios relating to registration and authentication actions are provided below.

### Registration Phase

In some embodiments, the registration phase is performed by an authentication module which is implemented and stored on server **130.** In the authentication module user personal profile authentication data is stored. The user personal profile authentication data includes, in some embodiments:
1. User personal data;
2. User device(s) identification data (alternative to password and login);
3. Registered Biometric Devices;
4. Stored Biometric Data;
5. Authentication Sequences.

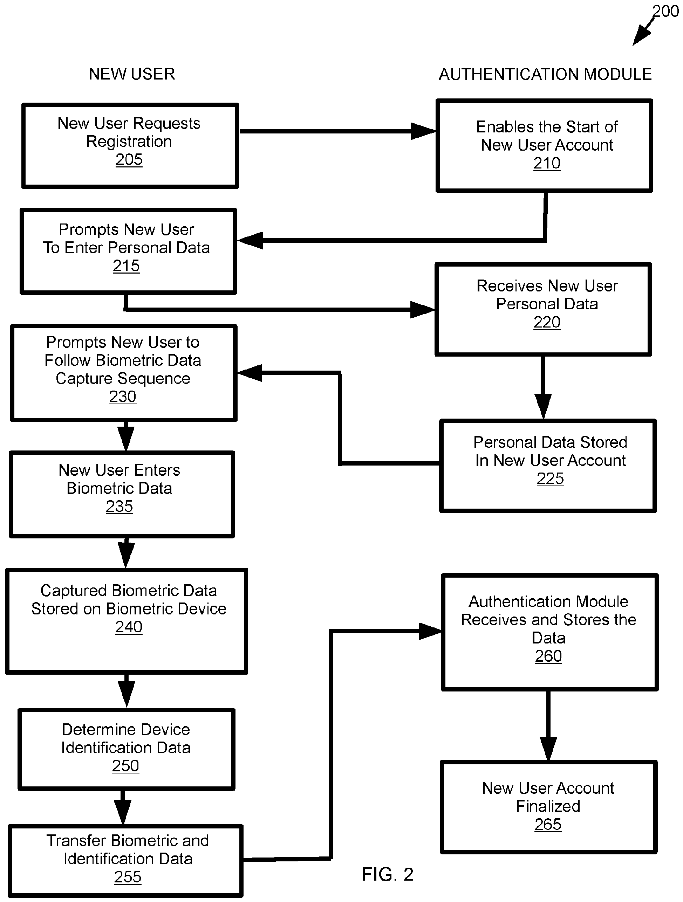

**FIG. 2** illustrates a registration phase **200** according to an aspect of the disclosure. At step **205,** a new user with the use of laptop **105** in **FIG. 1A** requests authentication module to server **130** via network **135** to register as a new user. At step **210,** the authentication module enables the start of a new user account. At step **215,** the authentication module prompts the new user to enter his or her personal data via keypad **140** using screen **145** and/or speaker **155** of laptop **105** in **FIG. 1A****.** At step **220,** the personal data entered by the user is received by the authentication module. The user personal data includes the user's name, address, occupation, email, telephone number, and other contact information as well as login information and a password.

At step **225,** the authentication module stores the user personal data in the new user account. At step **230** the authentication module prompts the new user to follow biometric data capture sequence, which is performed by the new user in step **235.** During this biometric data capture sequence, the new user enters examples of his or her biometric data. The instructions or steps that are to be followed during the authentication sequence are conveyed to the new user by using the screen **145** and/or speaker **155** of laptop **105.** The new user enters his or her biometric data as requested by the authentication module. This is done according to the biometric data capturing sequence with the biometric devices for example camera **110,** iris scanner **115,** microphone **150** and fingerprint scanner **120** shown in **FIG. 1A****.** The new user will receive instructions during this biometric data capturing sequence as to when and how these biometric data is captured. When entering a facial image as requested biometric data, the new user will receive an instruction like "position face in front of camera" and "press enter on keypad to start the facial capturing sequence" on screen **145** and/or with speaker **155.** During the fingerprint capture sequence, for example the new user will receive an instruction like "place right thumb on fingerprint scanner" and "press enter to start the fingerprint capturing sequence". Similar instructions will be used when the biometric data of an iris scan or a voice recording is captured. After the capturing of the biometric data one or more authentication sequences are generated and linked to the user. These authentication sequences are stored in the fourth column of Table 1. As already mentioned, these authentication sequences may differ in that they may or may not make use of all the registered biometric devices available. There are several variations of the authentication sequence possible.

A first possibility would be simply to capture the biometric data in a set sequence, for example, first capturing the facial features with camera **110** of the new user, then the iris features with iris scanner **115** and a fingerprint of the new user with fingerprint scanner **120.**

A second possibility of the authentication sequence would be that more than one biometric data type is captured substantially simultaneously. For example, an authentication sequence can require that the facial features are captured with camera **110** while simultaneously capturing the fingerprint of the new user with fingerprint scanner **120.** Another example would be that while the biometric iris data is captured with iris scanner **115,** the new user is required to say a certain phrase that is captured with microphone **150.**

A third possibility of the authentication sequence would be that a life and/or consciousness detection step is added to the authentication sequence, which is done to confirm that the new user is in fact alive or conscious. One such example of a life and/or consciousness detection feature would be that, while the facial features of the user are captured by camera **110,** the user is requested via screen **145** and or speaker **155,** for example, to perform certain life and/or consciousness detection steps. These steps can include to blink the eyes in a certain sequence, or to turn or move the head according to a certain sequence for example up, down, left, or right. The steps can also include that the new user holds the head still and only moves the eyes according to a certain sequence. Such a sequence can be that the new user moves the eyes left, right, up, and down. It can also include that the new user follows certain moving target on screen **145** of laptop **105** with his or her eyes while holding his or her head still. Another example of a life and/or consciousness detection step is to request the new user to look into the camera **110** or iris scanner **115** while a light source is directed into one or both of his eyes and then detect whether the greater intensity of light causes the pupil of the user to constrict. The light source may be any light source. As one example, the light source may be the screen **145** of laptop **105** or a screen of a mobile device, which may be temporarily changed to a bright white background that may cause constriction of the pupil of a user looking at the screen. Another life and/or consciousness detection step would be that while the biometric facial image data is captured with camera **110,** the new user is required to say a certain word or phrase that is captured with microphone **150.** Later in the authentication phase, the system may compare the spoken phrase of the new user with the captured phrase by microphone **150** as well as with the movement of the lips of the new user as captured by camera **110.**

At step **240** the biometric data is captured by each device and stored on the particular biometric device. This means that the facial image of the user is stored on camera **110,** his iris scan is stored on iris scanner **115** and his fingerprint is stored on fingerprint scanner **120.** If the biometric data cannot be stored on the particular device, then it is stored on the laptop **105** or any suitable user device.

At step **250,** the device identification data of all the biometric devices are determined. The user device identification data is normally provided by the manufacturer of the device. The user device identification data can be any of a Media Access Control (MAC) address, cryptographic hash, universally unique identifier, organizationally unique identifier, mobile equipment identifier (MEID), or any other similar device identification data. Determining the device identification data of all the devices means that the device identification data are read.

At step **255,** the biometric data and device identification data is transferred as shown FIG. **1A** from laptop **105** to the authentication module on server **130** via network **135.** At step **260,** the biometric data and device identification data is received by the authentication module and stored. The authentication module stores device identification data of the biometric devices of the new user next to the user's name or, alternatively, other personal data as registered biometric devices in the second column shown in Table 1. The authentication module stores the captured biometric data of the biometric devices of the new user next to his name or, alternatively, other personal data as stored biometric data in column 3 shown in Table 1. As shown in step **265** the new user account is now finalized.

### Access Granting Phase

In described embodiments, during an access granting phase, re-captured biometric data does not need to be transmitted to a remote system but can instead be compared locally to what is already stored on the biometric device. Thus, the access granting phase can be made both more efficient and more secure, such as by reducing the need to transmit sensitive data from the local biometric device to the remote system. In some embodiments, an access granting phase comprises receiving biometric device identification information from the registered biometric device; determining that the received biometric device identification information matches the registered biometric device's identification information assigned to the registered user; in response to determining that the received biometric device identification information matches the registered biometric device's identification information assigned to the registered user, instructing the registered biometric device to re-capture the registered user's biometric data; comparing the re-captured biometric data of the registered user to the initial biometric data stored on the registered biometric device; and based on the comparing, granting the registered user access to a resource.

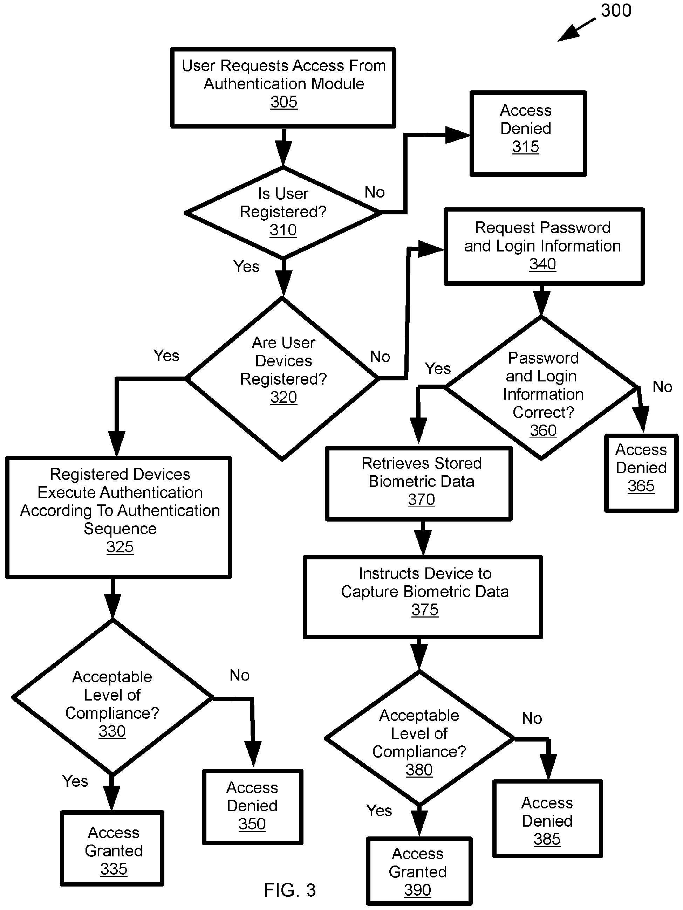

**FIG. 3** shows an illustrative access granting phase **300** of an embodiment of the biometric authentication system. To gain access to a device or service administered by the biometric authentication system, a user first requests access from the authentication module, as shown at step **305.** The authentication module then checks at step **310** if the user is registered, such as by going through the list of registered users shown in the first column in Table 1. If the user is not listed as a registered user in the first column, then the user is denied access as indicated by step **315.** Alternatively, the user is further provided with an option (not shown) to register as a new user, in which case the authentication module takes the user through a registration phrase, such as the registration phase **200** described with reference to **FIG. 2****.** If the user is a registered user, the authentication device checks if the biometric device or devices of the user are registered as indicated by step **320.** This is done by the authentication module by checking what biometric devices are registered and linked with the registered user, such as by reading information corresponding to column 2 in Table 1.

As shown at step **325,** if the biometric device or devices of the user are registered, then the authentication module instructs the registered biometric device or devices to execute an authentication sequence. The authentication module does this by selecting an authentication sequence that is registered and linked with the registered user, such as by reading information corresponding to the fourth column in Table 1. The selecting of an authentication sequence may be random or according to certain authentication sequence selection criteria. This selection criteria may comprise time elapsed between the previous and current access request, the biometric devices available, the device or service to which the user wants access, and the frequency at which the user selects access, or a combination thereof.

In the case of user 1 in Table 1, user 1 has camera 1, iris scanner 1, fingerprint scanner 1 and microphone 1 as registered biometric devices. In an illustrative scenario, the registered biometric devices are camera **110,** iris scanner **115,** fingerprint scanner **120** and microphone **150** shown in FIG. **1A****;** the authentication sequence of user 1 that was selected was authentication sequence 1.1.; and authentication sequence 1.1 includes one type of biometric data captured after the other sequentially.

First, user 1 will be instructed with the screen **145** and/or speaker **155** of laptop **105** to place his or her face in front of camera **110.** User 1 will also be instructed, for example, to confirm (e.g., by pressing the enter key on keypad **140**) if his or her face is in position for capturing an image. User 1 then positions his or her face in front of camera **110** and presses the enter key when the face is in position. Once the enter key is pressed biometric data, in the form of his facial features or image, will be captured.

Next, user 1 will be instructed once again with help of screen **145** and/or speaker **155** of laptop **105** to place his or her eye in front of iris scanner **115.** User 1 will place his or her eye in front of iris scanner **115** and will press the enter on keypad **140** of laptop **105.** When the enter key is pressed biometric data in the form of an iris scan of user 1 will be captured.

User 1 will follow the same steps with fingerprint scanner **120** and biometric data, his fingerprint will be captured as well as with microphone **150** and biometric data, his voice will be recorded or captured. The captured biometric data is then compared with the biometric data stored on the device itself during the registration process as shown in step **240** of FIG. **2****.** As the captured biometric data is compared with the biometric data stored on the device itself, it is not necessary to upload the captured biometric data to the authentication module. The authentication is thus done at the edge. As will be shown in more detail later the biometric data stored on the authentication module is password protected. As the biometric data is stored on the biometric device itself and the biometric data on the authentication module is password protected, the biometric data is stored and handled more securely.

At step **330** in FIG. **3** if the compliance level between the captured biometric data with the stored biometric data is at an acceptable level, access is granted, as indicated by step **335.** If the comparison does not produce an acceptable level of compliance, access is denied, as indicated by step **350.** An acceptable level of compliance may depend on several factors. It may depend on the quality of the biometric devices available, the number of biometric devices, and the number of users. An acceptable level of compliance may be accomplished when the authentication module is able to distinguish between registered and unregistered members with a high degree of accuracy (e.g., meeting or exceeding a particular confidence level threshold).

Returning to step **320,** if the user device is not registered, then the registered user is requested by the authentication module to login by submitting authentication credentials (e.g., a registered password and login information) as shown at step **340.** The correctness of the password and login information is checked at step **360.** If the password and login information is incorrect, access is denied in step **365.** If the password and login information is correct, the authentication module retrieves the stored biometric data of the user at step **370.** The stored biometric data are obtained by the authentication module, e.g., by retrieving information corresponding to column 3 associated with the user in Table 1. At step **375,** the authentication module instructs the unregistered biometric device to capture the biometric data of the user. The stored biometric data and the captured biometric data are then compared, and it is established if the comparison is at an acceptable level of compliance in step **380.** If the comparison is at an acceptable level of compliance, the user is granted access as indicated in step **390.** If the comparison is not at an acceptable level of compliance the user is denied access as indicated in step **385.**

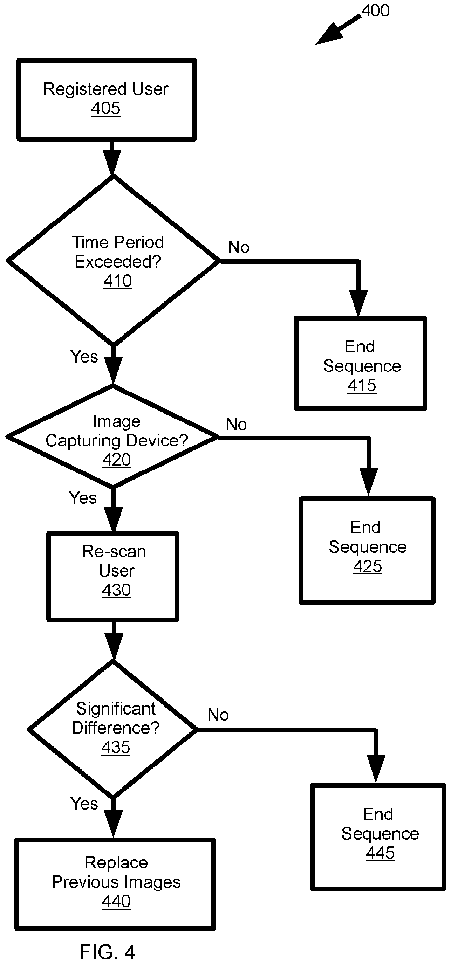

A further aspect of the disclosure is a facial image updating sequence. In some embodiments, such a sequence comprises, in response to detecting a registered image capturing device linked to the registered user, capturing an image of the face of the registered user; comparing the captured image of the face of the registered user with one or more previously stored images of the face of the registered user; and, in response to a difference being found, replacing the one or more previously stored images with the captured image. An illustrative facial image updating sequence **400** is shown in **FIG. 4****.** The facial image updating sequence **400** may be implemented by the authentication module. This illustrative sequence **400** can be used to provide for situations where there are major changes in the facial image of a registered user. An example would be if a registered user altered his appearance by growing a beard. Once a registered user has logged on and one of the biometric devices registered and linked to the registered user is an image capturing device the facial image updating sequence is applicable. The image capturing device may include depth cameras from which 3D meshes can be generated.

As can be seen in **FIG. 4** the sequence starts with a determination that a user is a registered user at step **405.** At step **410** the facial image updating sequence would check if the time period between the current login and previous login has exceeded a certain time period. This time period could be for example two weeks, or some other desired length of time. If the time period is not exceeded the sequence ends as indicated in step **415.** The sequence then checks at step **420** if one of the biometric devices is registered and linked to the registered user is an image capturing device. If there is no such device registered, then the sequence is ended at step **425.** If there is such a device registered, then at step **430** the facial image updating sequence would instruct the image capturing device to re-scan the face of the registered user. It would then compare the re-scanned image with the images stored in the authentication module and the image capturing device itself to determine if there are sufficient differences to warrant replacement of the previously stored images at step **435.** The determination of whether differences are significant can be made in different ways, such as by using a computer-vision based facial recognition system to compare the images, calculating a confidence score as to whether the images identify the same person, and identifying the differences as significant if the confidence score falls below a threshold. If there are no differences, or if detected differences are determined to not be significant, the sequence will be ended at step **445.** If there are significant differences, the system would then as shown at step **440** replace the previous stored images with the re-scanned images.

It should be understood that a method implementing this disclosure also falls within the scope of this disclosure.

While illustrative embodiments have been illustrated and described, it will be appreciated that various changes can be made therein without departing from the scope of the invention.

Aspects of the disclosure are set out in the following numbered clauses:
Clause 1. A biometric authentication system comprising:
   a remote computer system comprising a processor and memory storing program instructions configured to cause the remote computer system to perform steps comprising:
   in a registration phase: assigning a registered biometric device's identification information to a registered user; and storing, on the remote computer system, initial biometric data captured by the registered biometric device, wherein the initial biometric data is stored on the registered biometric device and on the remote computer system; and in an access granting phase:
   receiving biometric device identification information from the registered biometric device;
   determining that the received biometric device identification information matches the registered biometric device's identification information assigned to the registered user; in response to determining that the received biometric device identification information matches the registered biometric device's identification information assigned to the registered user, instructing the registered biometric device to re-capture the registered user's biometric data;
   comparing the re-captured biometric data of the registered user to the initial biometric data stored on the registered biometric device; and based on the comparing, granting the registered user access to a resource.
Clause 2. The system of clause 1, wherein the steps further comprise, in the registration phase: assigning login credentials to the registered user; and in the access granting phase: receiving biometric device identification information from an unregistered biometric device; requesting the registered user to supply the login credentials; in response to receiving the login credentials, retrieving the initial biometric data stored on the remote computer system; instructing the unregistered biometric device to re-capture the biometric data of the registered user; comparing the initial biometric data stored during registration with the re-captured biometric data of the registered user; and based on the comparing, granting the registered user access to the resource.
Clause 3. The system of clause 1, wherein the registered biometric device's identification information is one of a MAC address, a cryptographic hash, a universally unique identifier, an organizationally unique identifier, or a mobile equipment identifier.
Clause 4. The system of clause 1, wherein the remote computer system comprises a server.
Clause 5. The system of clause 1, wherein the registration phase comprises generating an authentication sequence and registering it with the registered user, and wherein the registered biometric device re-captures the registered user's biometric data in the access granting phase according to the authentication sequence.
Clause 6. The system of clause 1, wherein the registration phase comprises generating multiple authentication sequences.
Clause 7. The system of clause 6, wherein the registered biometric device re-captures the registered user's biometric data in the access granting phase according to an authentication sequence that is randomly selected from among the multiple authentication sequences.
Clause 8. The system of clause 6, wherein the registered biometric device re-captures the registered user's biometric data in the access granting phase according to an authentication sequence that is selected from among the multiple authentication sequences according to one or more authentication sequence selection criteria.
Clause 9. The system of clause 8, wherein the one or more authentication sequence selection criteria comprise time elapsed between a previous and current access request, available biometric devices, the resource to be accessed, or a combination thereof.
Clause 10. The system of clause 1, wherein the registered biometric device is an image capturing device, and wherein the instructions are further configured to cause the remote computer system to perform a facial image updating sequence comprising: in response to detecting a registered image capturing device linked to the registered user, capturing an image of the face of the registered user; comparing the captured image of the face of the registered user with one or more previously stored images of the face of the registered user; and in response to a difference being found, replacing the one or more previously stored images with the captured image.
Clause 11. The system of clause 10, wherein the facial image updating sequence is triggered in response to a time period between a current login and a previous login being greater than a threshold.
Clause 12. The system of clause 10, wherein the image capturing device is a depth camera capturing 3D face scans.
Clause 13. The system of clause 12, wherein the 3D face scans are captured by obtaining depth information that is converted into 3D meshes that are sent for reconstruction at the remote computer system.
Clause 14. The system of clause 1, wherein the registration phase comprises generating an authentication sequence, and wherein the authentication sequence requires capture of biometric iris data and a word or phrase that is captured with a microphone.
Clause 15. The system of clause 1, wherein the registration phase comprises generating an authentication sequence, and wherein the authentication sequence includes a consciousness detection step.
Clause 16. The system of claim 13, wherein the consciousness detection step comprises using an iris scanner to determine whether a light source causes a pupil to constrict.
Clause 17. A biometric authentication method comprising: implementing, by a remote computer system comprising a processor and memory, a registration phase and an access granting phase, the registration phase comprising: assigning a registered biometric device's identification information to a registered user; and storing, on the remote computer system, initial biometric data captured by the registered biometric device, wherein the initial biometric data is also stored on the registered biometric device; and the access granting phase comprising: receiving biometric device identification information from the registered biometric device; determining that the received biometric device identification information matches the registered biometric device's identification information assigned to the registered user; in response to determining that the received biometric device identification information matches the registered biometric device's identification information assigned to the registered user, instructing the registered biometric device to re-capture the registered user's biometric data; comparing the re-captured biometric data of the registered user to the initial biometric data stored in the registered biometric device in the registration phase; and based on the comparing, granting the registered user access to a resource.
Clause 18. The method of clause 15, wherein the registration phase further comprises:
   assigning login credentials to the registered user; and in the access granting phase: receiving biometric device identification information from an unregistered biometric device; requesting the registered user to supply the login credentials; in response to receiving the login credentials, retrieving the initial biometric data stored on the remote computer system; instructing the unregistered biometric device to re-capture the biometric data of the registered user; comparing the initial biometric data with the re-captured biometric data of the registered user; and based on the comparing, granting the registered user access to the resource.
Clause 19. The method of clause 15, wherein the registered biometric device's identification information is one of a MAC address, a cryptographic hash, a universally unique identifier, an organizationally unique identifier, or a mobile equipment identifier.
Clause 20. The method of clause 15, further comprising implementing a facial image updating sequence comprising: in response to detecting a registered image capturing device linked to the registered user, capturing an image of the face of the registered user; comparing the captured image of the face of the registered user with one or more previously stored images of the face of the registered user; and in response to a difference being found, replacing the one or more previously stored images with the captured image.
Clause 21. The method of clause 15, wherein the registration phase comprises generating an authentication sequence, and wherein the authentication sequence includes a consciousness detection step comprising using an iris scanner to determine whether a light source causes a pupil to constrict.
Clause 22. A non-transitory computer-readable medium comprising computer code which, once executed by at least one processor, causes at least one computer to perform steps comprising: assigning a registered biometric device's identification information to a registered user; storing, on a remote computer system, initial biometric data captured by the registered biometric device, wherein the initial biometric data is also stored on the registered biometric device; receiving biometric device identification information from the registered biometric device; determining that the received biometric device identification information matches the registered biometric device's identification information assigned to the registered user; in response to determining that the received biometric device identification information matches the registered biometric device's identification information assigned to the registered user, instructing the registered biometric device to re-capture the registered user's biometric data; comparing the re-captured biometric data of the registered user to the initial biometric data stored in the registered biometric device; and based on the comparing, granting the registered user access to a resource.

## Claims

1. A biometric authentication system comprising:
a remote computer system comprising a processor and memory storing program instructions configured to cause the remote computer system to perform steps comprising:
in a registration phase:
assigning a registered biometric device's identification information to a registered user; and
storing, on the remote computer system, initial biometric data captured by the registered biometric device, wherein the initial biometric data is stored on the registered biometric device and on the remote computer system; and
in an access granting phase:
receiving biometric device identification information from the registered biometric device;
determining that the received biometric device identification information matches the registered biometric device's identification information assigned to the registered user;
in response to determining that the received biometric device identification information matches the registered biometric device's identification information assigned to the registered user, instructing the registered biometric device to re-capture the registered user's biometric data;
comparing the re-captured biometric data of the registered user to the initial biometric data stored on the registered biometric device; and
based on the comparing, granting the registered user access to a resource.

2. The system of claim 1, wherein the steps further comprise, in the registration phase:
assigning login credentials to the registered user; and
in the access granting phase:
receiving biometric device identification information from an unregistered biometric device;
requesting the registered user to supply the login credentials;
in response to receiving the login credentials, retrieving the initial biometric data stored on the remote computer system;
instructing the unregistered biometric device to re-capture the biometric data of the registered user;
comparing the initial biometric data stored during registration with the re-captured biometric data of the registered user; and
based on the comparing, granting the registered user access to the resource.

3. The system of claim 1 or claim 2, wherein the registered biometric device's identification information is one of a MAC address, a cryptographic hash, a universally unique identifier, an organizationally unique identifier, or a mobile equipment identifier.

4. The system of any preceding claim, wherein the remote computer system comprises a server.

5. The system of any preceding claim, wherein the registration phase comprises generating an authentication sequence and registering it with the registered user, and wherein the registered biometric device re-captures the registered user's biometric data in the access granting phase according to the authentication sequence.

6. The system of any preceding claim, wherein the registration phase comprises generating multiple authentication sequences.

7. The system of claim 6, wherein the registered biometric device re-captures the registered user's biometric data in the access granting phase according to an authentication sequence that is randomly selected from among the multiple authentication sequences; or
wherein the registered biometric device re-captures the registered user's biometric data in the access granting phase according to an authentication sequence that is selected from among the multiple authentication sequences according to one or more authentication sequence selection criteria; and
preferably, wherein the one or more authentication sequence selection criteria comprise time elapsed between a previous and current access request, available biometric devices, the resource to be accessed, or a combination thereof.

8. The system of any preceding claim, wherein the registered biometric device is an image capturing device, and wherein the instructions are further configured to cause the remote computer system to perform a facial image updating sequence comprising:
in response to detecting a registered image capturing device linked to the registered user, capturing an image of the face of the registered user;
comparing the captured image of the face of the registered user with one or more previously stored images of the face of the registered user; and
in response to a difference being found, replacing the one or more previously stored images with the captured image.

9. The system of claim 8, wherein the facial image updating sequence is triggered in response to a time period between a current login and a previous login being greater than a threshold.

10. The system of claim 8, wherein the image capturing device is a depth camera capturing 3D face scans; and
preferably, wherein the 3D face scans are captured by obtaining depth information that is converted into 3D meshes that are sent for reconstruction at the remote computer system; and
preferably, wherein the consciousness detection step comprises using an iris scanner to determine whether a light source causes a pupil to constrict.

11. The system of any preceding claim, wherein the registration phase comprises generating an authentication sequence, and wherein the authentication sequence requires capture of biometric iris data and a word or phrase that is captured with a microphone; or
wherein the registration phase comprises generating an authentication sequence, and
wherein the authentication sequence includes a consciousness detection step.

12. A biometric authentication method comprising:
implementing, by a remote computer system comprising a processor and memory, a registration phase and an access granting phase, the registration phase comprising:
assigning a registered biometric device's identification information to a registered user; and
storing, on the remote computer system, initial biometric data captured by the registered biometric device, wherein the initial biometric data is also stored on the registered biometric device; and
the access granting phase comprising:
receiving biometric device identification information from the registered biometric device;
determining that the received biometric device identification information matches the registered biometric device's identification information assigned to the registered user;
in response to determining that the received biometric device identification information matches the registered biometric device's identification information assigned to the registered user, instructing the registered biometric device to re-capture the registered user's biometric data;
comparing the re-captured biometric data of the registered user to the initial biometric data stored in the registered biometric device in the registration phase; and
based on the comparing, granting the registered user access to a resource.

13. The method of claim 12, wherein the registration phase further comprises:
assigning login credentials to the registered user; and
in the access granting phase:
receiving biometric device identification information from an unregistered biometric device;
requesting the registered user to supply the login credentials;
in response to receiving the login credentials, retrieving the initial biometric data stored on the remote computer system;
instructing the unregistered biometric device to re-capture the biometric data of the registered user;
comparing the initial biometric data with the re-captured biometric data of the registered user; and
based on the comparing, granting the registered user access to the resource; or
wherein the registered biometric device's identification information is one of a MAC address, a cryptographic hash, a universally unique identifier, an organizationally unique identifier, or a mobile equipment identifier.

14. The method of claim 12 or claim 13, further comprising implementing a facial image updating sequence comprising:
in response to detecting a registered image capturing device linked to the registered user, capturing an image of the face of the registered user;
comparing the captured image of the face of the registered user with one or more previously stored images of the face of the registered user; and
in response to a difference being found, replacing the one or more previously stored images with the captured image; or
wherein the registration phase comprises generating an authentication sequence, and
wherein the authentication sequence includes a consciousness detection step comprising using an iris scanner to determine whether a light source causes a pupil to constrict.

15. A non-transitory computer-readable medium comprising computer code which, once executed by at least one processor, causes at least one computer to perform steps comprising:
assigning a registered biometric device's identification information to a registered user;
storing, on a remote computer system, initial biometric data captured by the registered biometric device, wherein the initial biometric data is also stored on the registered biometric device
receiving biometric device identification information from the registered biometric device;
determining that the received biometric device identification information matches the registered biometric device's identification information assigned to the registered user;
in response to determining that the received biometric device identification information matches the registered biometric device's identification information assigned to the registered user, instructing the registered biometric device to re-capture the registered user's biometric data;
comparing the re-captured biometric data of the registered user to the initial biometric data stored in the registered biometric device; and
based on the comparing, granting the registered user access to a resource.
